# EUROPÄISCHE PATENTSCHRIFT

(11) **EP 1 238 780 B1**
(45) Veröffentlichungstag und Bekanntmachung des Hinweises auf die Patenterteilung: **08.06.2005**
(21) Anmeldenummer: 02002221.6
(22) Anmeldetag: 30.01.2002
(51) Int. Cl.: B29C 49/38

(54) **Verfahren und Vorrichtung zur Herstellung von Rohren aus thermoplastischem Kunststoff mit Querprofilierung**
Method and apparatus for the manufacture of corrugated pipes made of thermoplastic material
Procédé et dispositif pour la fabrication de tuyaux transversalement ondulés en matière thermoplastique

(30) Priorität: 07.03.2001 DE 10110775
(43) Veröffentlichungstag der Anmeldung: 11.09.2002
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred, Dr. Dipl.-Ing.

(56) Entgegenhaltungen:
- EP-A- 0 636 462
- EP-A- 0 764 516
- DE-A- 19 914 974
- DE-U- 20 011 668

## Beschreibung

Die Erfindung betrifft ein Verfahren nach dem Oberbegriff des Anspruches 1 und eine Vorrichtung nach Anspruch 4.

Ein derartiges Verfahren und eine derartige Vorrichtung ist beispielsweise aus der EP 0 764 516 A2 (entspr. US-PS 5,693,347) bekannt.

Um zum einen eine sichere Verbindung von Rohren zu erreichen, die an einem Ende mit einer Muffe und am anderen Ende mit einem Spitzende versehen sind, ist eine minimale Länge der Verbindungsmuffe erforderlich. Hierbei wird in der Praxis und der Literatur von einer sogenannten Stecklänge, d. h. einer Länge, um die das Spitzende in die Muffe eingeführt wird, ausgegangen. Hierbei gilt, daß die Stecklänge auf jeden Fall größer als 30 % des Rohraußendurchmessers sein soll. Wenn Rohre sehr großen Durchmessers gefertigt werden sollen, dann bedeutet dies, daß bei einteiliger Ausgestaltung der zur Ausformung der Muffe dienenden Formabschnitts-Hälften diese und damit alle Formabschnitts-Hälften sehr lang würden. Dies bringt fertigungstechnische Probleme mit sich; insbesondere würden aber die Formabschnitts-Hälften sehr schwer, so daß wiederum die beim Verfahren aufzubringenden Kräfte, und zwar insbesondere die Beschleunigungskräfte, sehr groß würden. Dies gilt insbesondere, wenn bei der fortlaufenden Herstellung des Rohres Muffe und Spitzende jeweils direkt hintereinander ausgeformt werden sollen, wobei zwischen diesen dann jeweils noch ein herauszuschneidender Zwischenabschnitt ist.

Durch die Ausgestaltung der aus der EP 0 764 516 A2 (entspr. US-PS 5,693,347) bekannten Vorrichtung nach Art eines Brückenkrans mit Transport-Wagen und Transportarmen ist das gesamte System weitgehend drehmomentfrei, d. h. es treten keine Verkantungskräfte auf, die durch entsprechende konstruktive Maßnahmen aufgefangen werden müßten. Diese bekannte Vorrichtung ist daher besonders dort einsetzbar, wo Rohre großen Durchmessers hergestellt werden sollen, wozu also sehr große und damit schwere Formabschnitts-Hälften eingesetzt werden müssen.

Aus der EP 0 636 462 B1, der DE 199 46 571 C2 und der DE 200 11 668 U1 sind weitere Vorrichtungen bekannt geworden, bei denen jeweils zur Ausbildung von Muffen dienende Formabschnitts-Hälften dem Umlauf der Formabschnitts-Hälften zugeführt bzw. hieraus wieder herausgenommen werden können. In allen Fällen ist es gleichermaßen wie bei der gattungsbildenden Vorrichtung nur möglich, einen vom normalen Rohr abweichenden Rohrabschnitt, beispielsweise also eine Muffe, auszuformen, die mittels eines Paares von Formabschnitts-Hälften ausgeformt werden kann.

Der Erfindung liegt die Aufgabe zugrunde, ein Verfahren der gattungsgemäßen Art so auszubilden, daß jeweils wahlweise größere, vom normalen Rohr abweichende Rohrabschnitte ausgeformt werden können, die nicht in einem Paar Formabschnitts-Hälften ausgeformt werden können, und eine Vorrichtung zur Durchführung des Verfahrens anzugeben.

Diese Aufgabe wird erfindungsgemäß bei einem Verfahren der gattungsgemäßen Art durch die Merkmale im Kennzeichnungsteil des Anspruches 1 gelöst.

Der Kern der Erfindung liegt darin, daß jeweils mindestens zwei Paare von Formabschnitts-Hälften unmittelbar hintereinander in der Formstrecke eingesetzt werden können, die auch wieder herausgenommen und geparkt werden können. Sie werden eingesetzt, ohne daß sie sich während des Verfahrens wechselseitig behindern.

Eine Vorrichtung zur Durchführung des Verfahrens ist durch die Merkmale im Kennzeichnungsteil des Anspruches 4 charakterisiert. Auch hierbei ist wichtig, daß die Transportvorrichtung jederzeit alle Parkpositionen beliebig anfahren kann, ohne daß der Formstrecke näher gelegene Formabschnitts-Hälften im Wege sind.

Wenn die Transportvorrichtung nach Art eines Brückenkrans ausgebildet ist, dann ist es nicht notwendig, die Formabschnitts-Hälften übereinander zu heben; sie können aneinander vorbeigeführt werden.

Zahlreiche vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Vorrichtung zur Herstellung von Rohren in Draufsicht,
- Fig. 2: eine Stirnansicht der Vorrichtung gemäß dem Sichtpfeil II in Fig. 1 in teilweise aufgebrochener Darstellung,
- Fig. 3: die Vorrichtung in einer von Fig. 1 abweichenden Betriebsstellung in Draufsicht, und

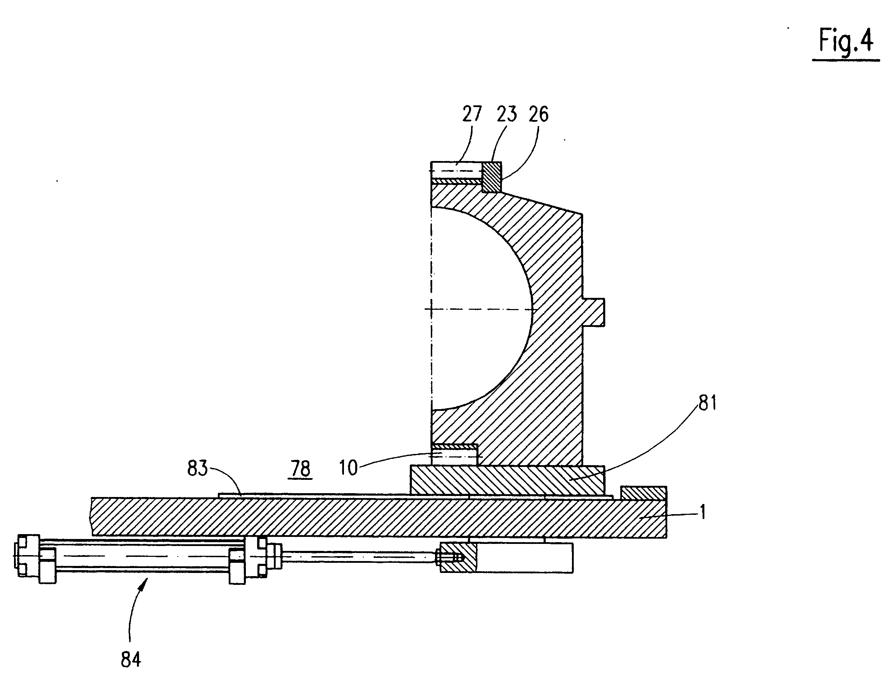

- Fig. 4: einen Teil-Querschnitt durch die Vorrichtung entsprechend der Schnittlinie IV-IV in Fig. 3.

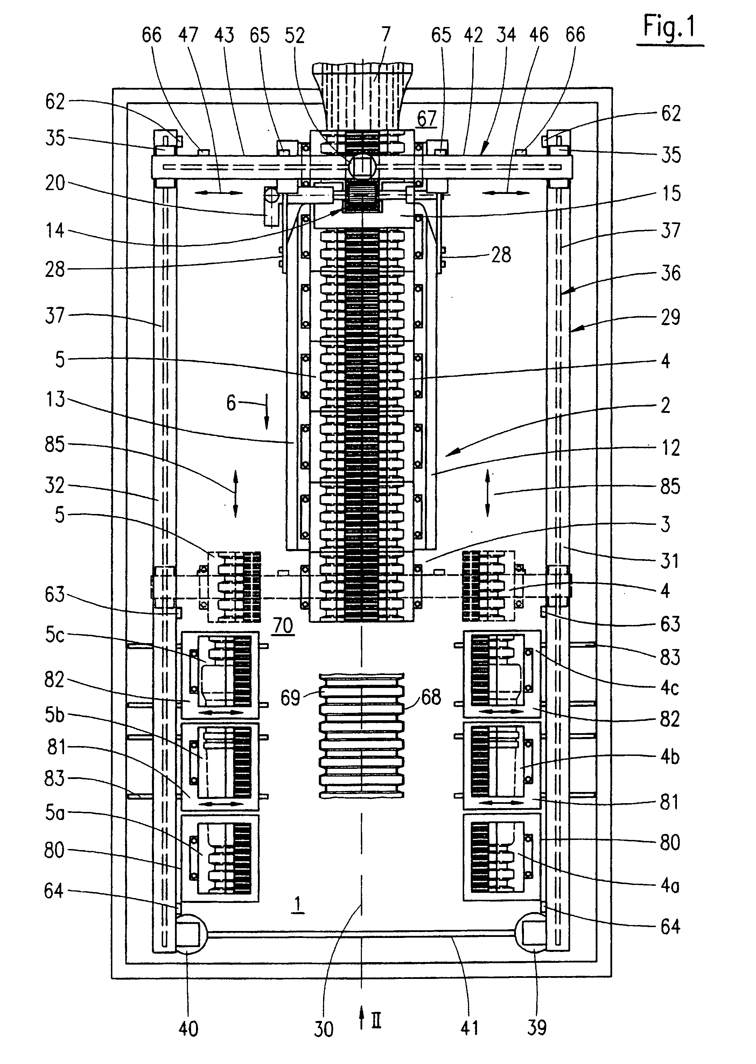

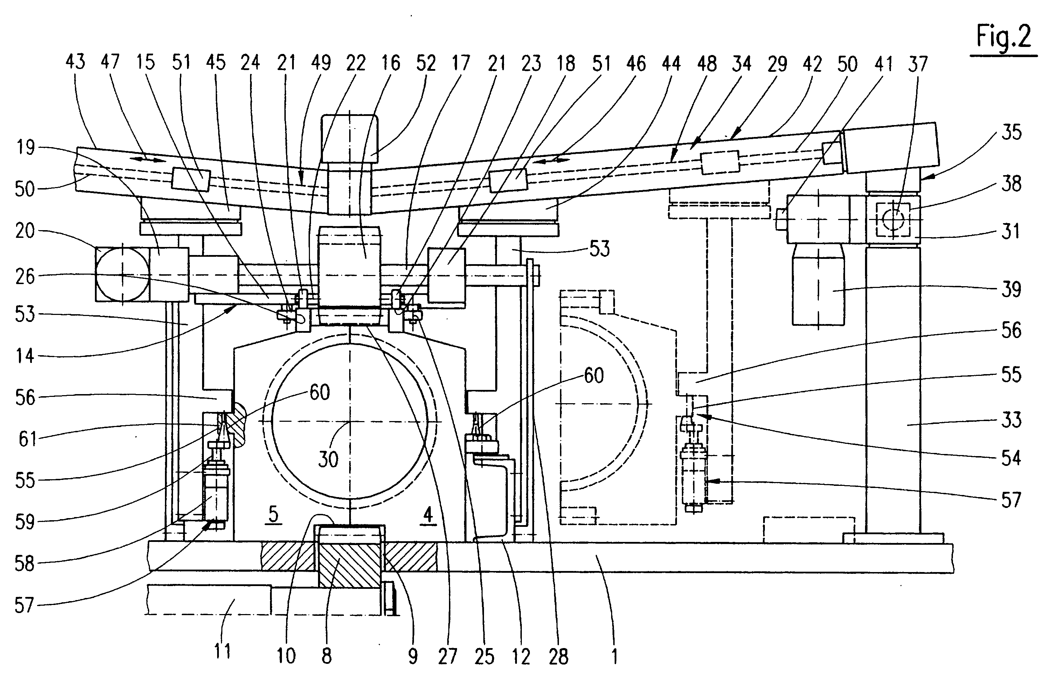

Die Fig. 1 und 2 zeigen eine Vorrichtung zur Herstellung von Rohren aus thermoplastischem Kunststoff mit Querprofilierung. Diese Vorrichtung weist eine Grundplatte 1 auf, auf der sich eine Formstrecke 2 befindet. Auf dieser Formstrecke 2 werden Formabschnitte 3 aneinandergereiht, die jeweils aus zwei Formabschnitts-Hälften 4, 5 bestehen. Solange die Formabschnitts-Hälften 4, 5 jeweils paarweise unter Bildung eines Formabschnitts 3 aneinanderliegen, und solange benachbarte Formabschnitte 3 unter Bildung einer Form aneinanderliegen, bewegen sie sich geradlinig entsprechend einer Produktionsrichtung 6 auf der Grundplatte 1. Zum kontinuierlichen Antrieb der durch die Formabschnitte 3 gebildeten Form ist unmittelbar hinter einem Spritzkopf 7 eines Extruders ein unteres Antriebsritzel 8 vorgesehen, das durch eine Ausnehmung 9 in der Grundplatte 1 hindurchragt und in ein an der jeweiligen Unterseite der Formabschnitts-Hälften 4, 5 ausgebildetes Zahnprofil 10 eingreift. Das untere Antriebsritzel 8 ist drehfest auf einer Antriebswelle 11 angebracht, die unterhalb der Grundplatte 1 gelagert ist und von einem nicht dargestellten Getriebe-Motor angetrieben wird. Die Formabschnitts-Hälften 4, 5 werden auf der Formstrecke 2 jeweils durch Führungsleisten 12, 13 geführt bzw. zusammengehalten, die in dem der Grundplatte 1 benachbarten Bereich der Formabschnitts-Hälften 4, 5 an diesen angreifen.

Oberhalb der Grundplatte 1 und oberhalb der Form ist eine Gegenlagerung 14 vorgesehen. Diese weist eine Basisplatte 15 auf, auf der ein oberes Antriebsritzel 16 gelagert ist. Dieses obere Antriebsritzel 16 ist ebenfalls drehfest an einer Antriebswelle 17 angebracht, die beidseitig in Lagern 18, 19 gelagert ist, die auf der Basisplatte 15 befestigt sind. Die Antriebswelle 17 wird von einem Getriebe-Motor 20 angetrieben, der an dem benachbarten Lager 19 angebracht ist. An der Unterseite der Basisplatte 15 sind Abstützrollen 21 mit horizontaler Drehachse 22 gelagert, die sich auf an der Oberseite jeder Formabschnitts-Hälfte 4, 5 ausgebildeten Abstützflächen 23 abstützen, wodurch die Lage der Gegenlagerung 14 zu den Formabschnitts-Hälften 4, 5 definiert wird. An der Unterseite der Basisplatte 15 sind weiterhin Führungsrollen 24 mit vertikaler Drehachse 25 gelagert, die seitlich an Führungsflächen 26 angreifen, die ebenfalls an der Oberseite der Formabschnitts-Hälften 4, 5 ausgebildet sind. Mittels dieser Führungsrollen 24 werden zwei einen Formabschnitt 3 bildende Formabschnitts-Hälften 4, 5 in ihrem oberen Bereich geführt bzw. zusammengehalten. Das obere Antriebsritzel 16 greift zwischen den Abstützflächen 23 bzw. den Führungsflächen 26 in ein Zahnprofil 27 ein, das an den Oberseiten der Formabschnitts-Hälften 4, 5 ausgebildet ist. Über das obere Antriebsritzel 16 wird nur 1/3 bis 1/4 des Betrages der Vorschubkraft auf die Formabschnitte 3 übertragen, der durch das untere Antriebsritzel 8 auf die Formabschnitte 3 ausgeübt wird. Die Gegenlagerung 14 ist in auf der Grundplatte 1 angebrachten, vertikal von dieser hochstehenden Drehmoment-Stützen 28 abgestützt, die das vom Getriebe-Motor 20 auf die Gegenlagerung 14 ausgeübte Drehmoment auffangen. Die Gegenlagerung 14 selber liegt im wesentlichen durch ihr Eigengewicht auf den Abstützflächen 23 auf. Dieses Eigengewicht reicht auch aus, die am Eingriff des oberen Antriebsritzels 16 in das Zahnprofil 27 auftretenden, vertikal nach oben auf die Gegenlagerung 14 wirkenden Kräfte zu kompensieren.

Oberhalb der Grundplatte 1 ist eine Transportvorrichtung 29 für die Formabschnitts-Hälften 4, 5 vorgesehen. Diese Transportvorrichtung 29 ist nach Art eines Brückenkranes aufgebaut. Sie weist zwei parallel zur Transportrichtung 6, zur Mittel-Längs-Achse 30 der Formabschnitte 3 und zur Grundplatte 1 und parallel zueinander verlaufende Führungsschienen 31, 32 auf. Diese sind oberhalb der Gegenlagerung 14 angeordnet und über Stützen 33 gegenüber der Grundplatte 1 abgestützt. Auf den Führungsschienen 31, 32 ist eine Transport-Brücke 34 über Lauf-Wagen 35 abgestützt. Die Verschiebung der Transport-Brücke 34 auf den Führungsschienen 31, 32 erfolgt mittels Linearantrieben 36, die in der konkreten Ausgestaltung als Spindelantriebe ausgebildet sind. Diese Linearantriebe 36 weisen demzufolge auf den Führungsschienen 31, 32 angeordnete Gewindespindeln 37 auf, auf denen Gewindemuttern 38 angeordnet sind, die wiederum an den Lauf-Wagen 35 befestigt sind. Die Gewindespindeln 37 werden jeweils über einen Getriebe-Motor 39, 40 angetrieben, wobei diese beiden Getriebe-Motoren 39, 40 über eine horizontale und quer zu den Führungsschienen 31, 32 verlaufende Kuppel-Welle 41 zwangs-synchronisiert sind. Die beiden Gewindespindeln 37 werden also exakt drehzahlgleich angetrieben, so daß die Transport-Brücke 34 verkantungsfrei auf den Führungsschienen 31, 32 verfahren wird. Die Transport-Brücke 34 weist zwei Brücken-Abschnitte 42, 43 auf, die jeweils von den Führungsschienen 31, 32 aus gesehen aufeinanderzu zur Grundplatte 1 hin geneigt verlaufen. Der Abstand der Brücke 34 von der Grundplatte 1 ist also in ihrer Mitte, senkrecht oberhalb der Mittel-Längs-Achse 30 am geringsten. Auf den beiden Brücken-Abschnitten 42, 43 ist jeweils ein Transport-Wagen 44, 45 verfahrbar angeordnet, der in der jeweiligen Verfahrrichtung 46 bzw. 47 mittels eines Linearantriebs 48 bzw. 49 verschiebbar ist. Diese Linearantriebe 48, 49 bestehen im wesentlichen aus jeweils einer im jeweiligen BrückenAbschnitt 42 bzw. 43 gelagerten Gewindespindel 50, die in eine Gewindemutter 51 am jeweiligen Transport-Wagen 44 bzw. 45 eingreift. Die beiden Gewindespindeln 50 werden von einem gemeinsamen Getriebe-Motor 52 angetrieben. Die Getriebe-Motoren 39, 40 und der Getriebe-Motor 52 sind umsteuerbare Motoren, also für Vorwärts- und Rückwärtslauf geeignet.

An den Transport-Wagen 44 und 45 ist jeweils ein Transportarm 53 angebracht, der sich senkrecht nach unten erstreckt. An jedem Transportarm 53 ist eine Haltevorrichtung 54 für eine Formabschnitts-Hälfte 4 bzw. 5 angebracht. Ihr zugeordnet ist an jeder Formabschnitts-Hälfte 4 bzw. 5 ein Halte-Widerlager 55 ausgebildet. Jede Haltevorrichtung 54 weist eine obere Anlage 56 auf, gegen die von unten ein Halte-Widerlager 55 angedrückt wird. Zur Haltevorrichtung 54 gehört weiterhin eine Spannvorrichtung 57, die im wesentlichen aus einem pneumatischen oder hydraulischen Kolben-Zylinder-Antrieb 58 besteht. An der Kolbenstange 59 dieses Antriebs 58 ist ein Verriegelungszapfen 60 ausgebildet, der bei entsprechender Betätigung des Antriebs 58 in eine Verriegelungsausnehmung 61 an der Unterseite des Halte-Widerlagers 55 eingreift und gleichzeitig das Widerlager 55 gegen die Anlage 56 drückt. In der in Fig. 2 links dargestellten Position ist die Haltevorrichtung 54 fest mit dem Halte-Widerlager 55 der benachbarten Formabschnitts-Hälfte 4 bzw. 5 verriegelt; letztere ist also fest mit dem Transportarm 53 verbunden.

An den Führungsschienen 31, 32 sind Näherungsschalter, von denen nur einige Näherungsschalter 62, 63 dargestellt sind, angeordnet, die bei Annäherung der Transport-Brücke 34 deren Position repräsentierende Signale an eine zentrale Steuerung abgeben, die nicht dargestellt ist. An der Transport-Brücke 34 sind ebenfalls Näherungsschalter 65, 66 angebracht, die eine innere bzw. eine äußere Position des jeweiligen Transport-Wagens 44, 45 repräsentierende Signale an die zentrale Steuereinheit abgeben.

Aus dem Spritzkopf 7 des Extruders werden zwei Schläuche aus warmplastischem Kunststoff extrudiert, die am stromaufwärtigen Ende 67 der Formstrecke 2 in die Form eintreten und dort mittels Überdruck bzw. Vakuum und gegebenenfalls Stützluft zu einem Verbund-Rohr 68 verformt werden, das eine glatte Innenwandung und eine äußere Wellung 69 aufweist, wie es im einzelnen aus der EP 0 563 575 A1 (entspr. US-PS 5,320,797) bekannt ist, worauf verwiesen werden darf. Alternativ können auch einwandige Wellrohre oder Rippenrohre geformt werden.

Die aus den Formabschnitten 3 bestehende Form wandert in Produktionsrichtung 6 vor. Das in ihr erzeugte Rohr 68 wandert mit gleicher Geschwindigkeit mit. Wenn jeweils ein Formabschnitt 3 das stromabwärtige Ende 70 der Formstrecke 2 erreicht hat, müssen die beiden diesen Formabschnitt 3 bildenden Formabschnitts-Hälften 4, 5 quer zur Produktionsrichtung 6 aus der Formstrecke 2 herausgenommen werden. Dies geschiehtwie in Fig. 1 und 2 gestrichelt dargestellt ist - mittels der durch die Transport-Wagen 44, 45 mit Transportarmen 53 gebildeten Querfördereinrichtungen. Die Transport-Brücke 34 wird während der letzten kurzen Wegstrecke des in Produktionsrichtung 6 letzten Formabschnitts 3 geschwindigkeitsgleich mit diesem mitgefahren, wobei die beiden Transport-Wagen 44, 45 in ihre einander benachbarte Position verfahren werden. In dieser Position sind die Haltevorrichtungen 54 mit den Halte-Widerlagern 55 der beiden Formabschnitts-Hälften 4, 5 verriegelt worden. Bei Erreichen des stromabwärtigen Endes 70 werden die beiden Transport-Wagen 44, 45 aufgrund eines entsprechenden Signals der aufgrund eines entsprechenden Signals der Näherungsschalter 63 auseinandergefahren, wozu der Getriebe-Motor 52 entsprechend angesteuert wird. Aufgrund der Neigung der beiden Brücken-Abschnitte 42, 43 werden die an den Transportarmen 53 gehaltenen Formabschnitts-Hälften 4, 5 von der Grundplatte 1 abgehoben und reibungsfrei nach außen verfahren. Wenn die Transport-Wagen 44, 45 die äußeren Näherungsschalter 66 erreichen, werden sie angehalten. Die Getriebe-Motoren 39, 40 werden angesteuert, so daß die Transport-Brücke 34 entgegen der Produktionsrichtung 6 bis zum stromaufwärtigen Ende 67 der Formstrecke 2 verfahren wird. Auch bei diesem Transport der Formabschnitts-Hälften 4, 5 entgegen der Produktionsrichtung 6 stehen diese nicht in Berührung mit der Grundplatte 1, sondern befinden sich reibungsfrei oberhalb von dieser. Sie werden immer parallel zu sich selbst bewegt.

Bei Erreichen der stromaufwärtigen Näherungsschalter 62 werden die Getriebe-Motoren 39, 40 gestoppt, so daß die Transport-Brücke 34 stillsteht. Es wird dagegen der Getriebe-Motor 52 eingeschaltet und verfährt die Transport-Wagen 44, 45 nach innen zur Formstrecke hin und führt die beiden Formabschnitts-Hälften 4, 5 am stromaufwärtigen Ende 67 quer zur Produktionsrichtung 6 in die Formstrecke 2 ein, wie in Fig. 1 und 2 ausgezogen dargestellt ist. Beim Verfahren der Transport-Wagen 44, 45 zur Formstrecke 2 hin werden aufgrund der Neigung der Brücken-Abschnitte 42, 43 die Formabschnitts-Hälften 4, 5 wieder zur Grundplatte 1 hin abgesenkt, auf der sie zur Auflage kommen, wenn die beiden Formabschnitts-Hälften 4, 5 eines Formabschnitts 3 einander berühren, wie es in Fig. 2 dargestellt ist. Anschließend wird die Transport-Brücke 34 in Produktionsrichtung 6 verfahren bis die beiden bereits einen Formabschnitt 3 bildenden Formabschnitts-Hälften 4, 5 an den in Produktionsrichtung 6 voreilenden Formabschnitts-Hälften 4, 5 zur Anlage kommen und von den Antriebsritzeln 8 und 16 erfaßt und weitergefördert werden. Dann werden die Spannvorrichtungen 57 gelöst und die Transportarme 53 jeweils wieder von der Formstrecke weg nach außen verfahren. Die Transport-Brücke 34 wird anschließend wieder bis zum stromabwärtigen Ende 70 verfahren, wie zuvor bereits beschrieben worden ist. Soweit die Vorrichtung bisher beschrieben worden ist, ist sie aus der EP 0 764 516 A2 (entspr. US 5,693,347 A) bekannt.

Auf der bisher beschriebenen Vorrichtung zur Herstellung von Rohren 68 können auch zusätzliche Formabschnitts-Hälften 4a, 5a, 4b, 5 b, 4c, 5c zur Bildung zusätzlicher Formabschnitte eingesetzt werden, beispielsweise wenn in vorgegebenen Abständen bei dem endlos herzustellenden Rohr 68 Muffen 71 mit großer Länge hergestellt werden sollen, die einen Muffengrund 72, einen Mittelbereich 73 und einen Einführbereich 74 aufweisen. Weiterhin schließt sich an den Einführbereich 74 ein herauszuschneidender Übergangsbereich 75 an, dem dann ein Spitzende 76 folgt. Dieser sich vom Muffengrund 72 bis zum Spitzenende 76 erstreckende Bereich soll in-line ausgeformt werden. Wie eingangs erwähnt, bezieht sich die Erfindung primär auf die Herstellung von Rohren mit großem Durchmesser; in der Zeichnung sind die Durchmesser bezogen auf die jeweilige Länge zu klein dargestellt. Die In-line-Ausformung von Muffen als solche innerhalb jeweils eines Paares von Formabschnitts-Hälften ist beispielsweise aus der EP 0 563 575 A1 (entspr. US-PS 5,320,797) bekannt, worauf bezüglich der Verformungstechnik verwiesen wird.

Die zusätzlichen Formabschnitts-Hälften 4a, 5a, 4b, 5b, 4c, 5c befinden sich - bezogen auf die Produktionsrichtung 6 - stromabwärts des stromabwärtigen Endes 70 der Formstrecke 2 in Parkpositionen 77, 78, 79 auf der Grundplatte 1. In diese Parkpositionen 77, 78, 79 kann die Transport-Brücke 34 verfahren werden. Die Parkposition 77 wird jeweils durch einen Sockel 80 auf der Grundplatte 1 gebildet, dessen Höhe über der Grundplatte 1 sich aus der Neigung der Brücken-Abschnitte 42, 43 ergibt. Der Sockel 80 ist jeweils so hoch, daß die jeweilige Formabschnitts-Hälfte 4a bzw. 5a in der zugeordneten Stellung der sie tragenden Transportarme 53 auf diesem Sockel 80 aufsitzt.

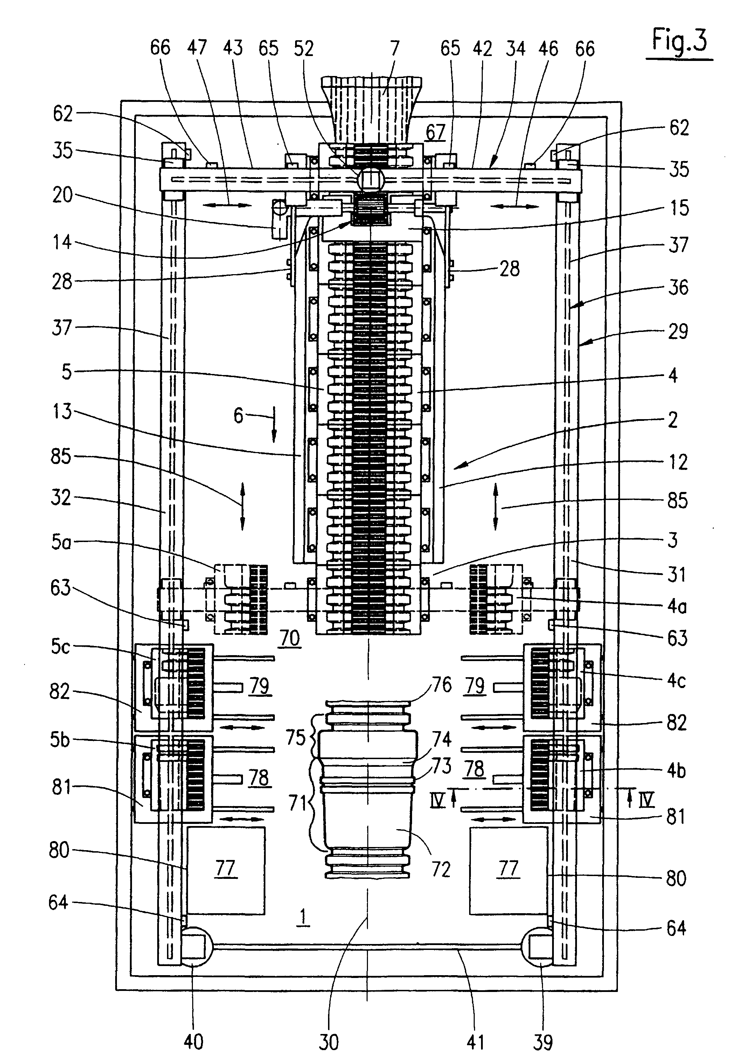

Die beiden anderen weiter stromaufwärts gelegenen Parkpositionen 78, 79 sind jeweils durch Schlitten 81, 82 gebildet, die auf Schienen 83 quer zur Produktionsrichtung 6 auf der Grundplatte 1 verschiebbar sind. Zur Verschiebung dienen Linearantriebe 84, bei denen es sich um pneumatisch oder hydraulisch beaufschlagbare Kolben-Zylinder-Antriebe handeln kann. Die Schlitten 81, 82 sind zwischen jeweils einer in Fig. 2 dargestellten Ruheposition und einer in Fig. 1 dargestellten Zugriffsposition verschiebbar. In der Ruheposition sind die die Formabschnitts-Hälften 4b, 5b tragenenden Schlitten 81 und die die Formabschnitts-Hälften 4c, 5c tragenden Schlitten 82 soweit aus dem Verfahrweg 85 der Transportarme 53 herausgefahren, daß die Formabschnitts-Hälften 4a, 5a nicht mit ihnen kollidieren können, wie aus Fig. 3 anschaulich hervorgeht. Entsprechendes gilt für das Verfahren der Formabschnitts-Hälften 4b, 5b, wenn diese an den Formabschnitts-Hälften 4c bzw. 5c vorbeitransportiert werden müssen. Für die Höhe der Schlitten 81, 82 gilt das zu den Sockeln 80 gesagte. Während die auf den Sockeln 80 in der Parkposition 77 geparkten Formabschnitts-Hälften 4a, 5a als am weitesten stromabwärts gelegene Formabschnitts-Hälften jeweils in dem Verfahrweg 85 der Transportarme 53 verbleiben können, müssen die Formabschnitts-Hälften 4b, 5b und 4c, 5c jeweils nach ihrem Absetzen auf dem Schlitten 81 bzw. 82 in die Ruheposition verfahren werden; sie werden nur unmittelbar vor der Aufnahme durch die Transportarme 53 wieder in die Zugriffsposition gemäß Fig. 1 verfahren.

Den Parkpositionen 77, 78, 79 sind Näherungsschalter an den Führungsschienen 31, 32 zugeordnet, von denen nur die Näherungsschalter 64 dargestellt sind. Wenn die zum Ausbilden des Muffengrundes 72 dienenden zusätzlichen Formabschnitts-Hälften 4a, 5a eingesetzt werden sollen, dann wird die Transport-Brücke 34 bis in die Parkposition 77 verfahren und es erfolgt ein Verriegeln der zusätzlichen Formabschnitts-Hälften 4a, 5a mit den Transportarmen 53 der Transport-Wagen 44, 45, wie gestrichelt in Fig. 3 dargestellt ist. Anschließend erfolgt der Transport entgegen der Produktionsrichtung 6 in der bereits geschilderten Weise, bis die beiden zusätzlichen Formabschnitts-Hälften 4a, 5a am stromaufwärtigen Ende 67 in die Formstrecke 2 eingeführt werden können. Anschließend werden die Formabschnitts-Hälften 4b, 5b und danach die Formabschnitts-Hälften 4c, 5c jeweils paarweise in der gleichen Weise aufgenommen und zum stromaufwärtigen Ende 67 transportiert und in die Formstrecke 2 eingeführt. Alle werden in der bereits geschilderten Weise am stromabwärtigen Ende 70 aus der Formstrecke herausgenommen und wieder in ihre Parkposition 77 bzw. 78 bzw. 79 verbracht. Die in der Parkposition 78 zu parkenden Formabschnitts-Hälften 4b, 5b dienen im wesentlichen zum Formen eines Teils des Muffengrundes 72 und des Mittelbereichs 73 der Muffe 71, während die Formabschnittshälften 4c, 5c im wesentlichen zum Formen des Einführbereichs 74 und des Übergangsbereichs 75 dienen.

Wie auch aus der EP 0 764 516 A2 (entspr. US-PS 5,693,347) bekannt ist, können auf der Vorrichtung Rohre 68 unterschiedlichen Durchmessers hergestellt werden. Der aus der Muffe 71, dem Übergangsbereich 75 und dem Spitzende 76 bestehende Abschnitt des endlosen Rohres 68 kann bei kleineren Rohr-Durchmessern so kurz werden, daß insgesamt nur zwei zusätzliche Formabschnitts-Hälften zur Ausformung notwendig sind.

## Patentansprüche

1. Verfahren zur Herstellung von Rohren (68) aus thermoplastischem Kunststoff mit Querprofilierung, mit im Anschluß an einen Spritzkopf (7) in zwei einander gegenüberliegenden Reihen angeordneten, im Kreislauf geführten Formabschnitts-Hälften (4, 5), die sich paarweise entlang einer geraden Formstrecke (2) zu einer geschlossenen Hohlform ergänzen, wobei jede der nicht miteinander verbundenen Formabschnitts-Hälften (4, 5) einer Reihe mittels einer Transportvorrichtung (29) am stromabwärtigen Ende (70) der Formstrecke (2) im wesentlichen quer zur Produktionsrichtung (6) aus der Formstrecke (2) herausgeführt und zum stromaufwärtigen Ende (67) der Formstrecke (2) zurückgeführt und dort wieder in die Formstrecke (2) hineingeführt und an die jeweils in Produktionsrichtung (6) vorlaufende Formabschnitts-Hälfte (4, 5) angesetzt wird,
wobei stromabwärts des stromabwärtigen Endes (70) der Formstrecke (2) und beiderseits von dieser jeweils eine zusätzliche erste Formabschnitts-Hälfte (4a, 5a) in einer ersten Parkposition (77) geparkt wird, die in die Formstrecke (2) einführbar ist, **dadurch kennzeichnet,**
**daß** jeweils mindestens eine weitere zusätzliche Formabschnitts-Hälfte (4b, 5b, 4c, 5c) zwischen den ersten Parkpositionen (77) für die ersten Formabschnitts-Hälften (4a, 5a) und dem stromabwärtigen Ende (70) der Formstrecke (2) in jeweils mindestens einer weiteren Parkposition (78, 79) geparkt wird, welche zusätzlichen Formabschnitts-Hälften (4b, 5b, 4c, 5c) ebenfalls in die Formstrecke (2) einführbar sind.

2. Verfahren nach Anspruch 1, wobei
jeweils mindestens eine weitere zusätzliche Formabschnitts-Hälfte (4b, 5b, 4c, 5c) aus einem Verfahrweg (85) der ersten Formabschnitts-Hälften (4a, 5a) herausgefahren wird, wenn die ersten Formabschnitts-Hälften (4a, 5a) aus ihrer ersten Parkposition (77) zur Formstrecke (2) bzw. aus der Formstrecke (2) in die erste Parkposition (77) verfahren werden.

3. Verfahren zur Herstellung von Rohren (68) mit in-line-angeformten Muffen (71), nach Anspruch 1, wobei
die ersten Formabschnitts-Hälften (4a, 5a) und die weiteren zusätzlichen Formabschnitts-Hälften (4b, 5b, 4c, 5c) unmittelbar hintereinander in der Formstrecke (2) zur Formung einer Muffe (71) am Rohr (68) eingesetzt werden.

4. Vorrichtung zur Durchführung des Verfahrens nach einem der Ansprüche 1 bis 3, wobei
stromabwärts des stromabwärtigen Endes (70) der Formstrecke (2) und beiderseits von dieser jeweils eine erste Parkposition (77) für eine zusätzliche erste Formabschnitts-Hälfte (4a, 5a) ausgebildet ist, die von der Transportvorrichtung (29) anfahrbar ist, **dadurch gekennzeichnet, daß** zwischen den ersten Parkpositionen (77) für die ersten Formabschnitts-Hälften (4a, 5a) und dem stromabwärtigen Ende (70) der Formstrecke (2) jeweils mindestens eine weitere Parkposition (78, 79) für jeweils mindestens eine weitere zusätzliche Formabschnitts-Hälfte (4b, 5b, 4c, 5c) ausgebildet ist, die ebenfalls von der Transportvorrichtung (29) anfahrbar ist.

5. Vorrichtung nach Anspruch 4, wobei
die jeweils mindestens eine weitere zusätzliche Formabschnitts-Hälfte (4b, 5b, 4c, 5c) quer zur Produktionsrichtung (6) aus einem Verfahrweg (85) der jeweils ersten Formabschnitts-Hälfte (4a, 5a) herausbewegbar ausgebildet ist.

6. Vorrichtung nach Anspruch 5, wobei
die jeweils mindestens eine weitere Parkposition (78, 79) die weiteren zusätzlichen Formabschnitts-Hälften (4b, 5b, 4c, 5c) aufnehmende Schlitten (81, 82) aufweist.

7. Vorrichtung nach Anspruch 4, wobei
die Transportvorrichtung (29) nach Art eines Brückenkranes ausgebildet ist, der eine in Produktionsrichtung (6) verfahrbare, die Formstrecke (2) übergreifende Transport-Brücke (34), zwei auf der Transport-Brücke (34) angeordnete, quer zur Produktionsrichtung (6) und gegensinnig zueinander verfahrbare Transport-Wagen (44, 45) und an jedem Transport-Wagen (44, 45) einen nach unten zur Grundplatte (1) gerichteten Transportarm (53) mit einer Haltevorrichtung (54) für je eine Formabschnitts-Hälfte (4, 5) aufweist.

8. Vorrichtung nach Anspruch 6, wobei
die Schlitten (81, 82) auf Schienen (83) verfahrbar sind.

9. Vorrichtung nach Anspruch 4, wobei
die ersten Parkpositionen (77) ortsfest gegenüber der Grundplatte (1) sind.

10. Vorrichtung nach Anspruch 4, wobei
die Parkpositionen (77, 78, 79) gegenüber der Grundplatte (1) erhöht sind.

11. Vorrichtung nach Anspruch 6,
wobei die Schlitten (81, 82) mittels Linearantrieben (84) verfahrbar sind.

## Claims

1. A method for the manufacture of pipes of thermoplastics with transverse profile features, comprising mold segment halves (4, 5) which are circulated and, subsequent to an injection head (7), disposed in two lines opposite to each other, and which complement one another by twos along a straight molding path (2), forming a closed hollow mold;
wherein each of the mold segment halves (4, 5) of a line that are not interconnected is guided out of the molding path (2) at the downstream end (70) thereof and substantially at right angles to the direction of production (6) by means of a conveying device (29) and is re-circulated to the upstream end (67) of the molding path (2), where it is again inserted in the molding path (2) and attached to the respective mold segment half (4, 5) that leads in the direction of production (6);
wherein downstream of the downstream end (70) of the molding path (2) and on both sides thereof, an additional first mold segment half (4a, 5a) is kept in a first parking position (77) for insertion in the molding path (2);
**characterized**
**in that** at least one additional mold segment half (4b, 5b, 4c, 5c) is kept in at least one additional parking position (78, 79) between the first parking positions (77) for the first mold segment halves (4a, 5a) and the downstream end (70) of the molding path (2), these additional mold segment halves (4b, 5b, 4c, 5c) also being insertable in the molding path (2).

2. A method according to claim 1, wherein at least one further additional mold segment half (4b, 5b, 4c, 5c) is moved out of the path of displacement (85) of the first mold segment halves (4a, 5a), when the first mold segment halves (4a, 5a) are moved from their first parking position (77) toward the molding path (2) and from the molding path (2) into the first parking position (77), respectively.

3. A method, according to claim 1, for the manufacture of pipes with in-line molded sockets (71), wherein the first mold segment halves (4a, 5a) and the further additional mold segment halves (4b, 5b, 4c, 5c) are inserted directly successively in the molding path (2) for molding a socket (71) on the pipe (68).

4. An apparatus for putting into practice the method according to one of claims 1 to 3, wherein downstream of the downstream end (70) of the molding path (2) and on both sides thereof, provision is made for a first parking position (77) for an additional first mold segment half (4a, 5a) that is approachable by the conveying device (29); **characterized**
**in that** between the first parking positions (77) for the first mold segment halves (4a, 5a) and the downstream end (70) of the molding path (2), provision is made for at least one additional parking position (78, 79) for at least one further additional mold segment half (4b, 5b, 4c, 5c) that is also approachable by the conveying device (29).

5. An apparatus according to claim 4, wherein the at least one further additional mold segment half (4b, 5b, 4c, 5c) is designed for removal, crosswise of the direction of production (6), from a path of displacement (85) of the respective first mold segment half (4a, 5a).

6. An apparatus according to claim 5, wherein the at least one further parking position (78, 79) comprises carriages (81, 82) for lodgment of the further additional mold segment halves (4b, 5b, 4c, 5c).

7. An apparatus according to claim 4, wherein the conveying device (29) is in the form of a gantry crane, comprising a conveying bridge (34) that is displaceable in the direction of production (6) and bridges the molding path (2); two conveying carriages (44, 45) that are disposed on the conveying bridge (34) and displaceable in opposite directions and crosswise of the direction of production (6); and a conveying arm (53) on each conveying carriage (44, 45), the conveying arm (53) being directed downwards toward the base (1) and having a holding device (54) for a respective mold segment half (4, 5).

8. An apparatus according to claim 6, wherein the carriages (81, 82) are movable on rails (83).

9. An apparatus according to claim 4, wherein the first parking positions (77) are stationary relative to the base (1).

10. An apparatus according to claim 4, wherein the parking positions (77, 78, 79) are raised as compared to the base (1).

11. An apparatus according to claim 6, wherein the carriages (81, 82) are movable by linear drives (84).

## Revendications

1. Procédé de fabrication de tuyaux (68) en matière thermoplastique avec un profilage transversal, comportant, en raccordement à la tête d'injection (7), des demi-moules (4, 5), qui sont agencés dans deux rangées face à face et guidés sur une trajectoire circulaire et qui, le long d'une ligne de formage (2) rectiligne, se complètent par paire pour former un moule creux fermé, chacun des demi-moules (4, 5), non assemblés entre eux, d'une rangée étant guidé sensiblement transversalement à la direction de production (6), au moyen d'un dispositif de transport (29), hors de la ligne de formage (2) au niveau de l'extrémité arrière (70) de la ligne de formage (2) et renvoyé vers l'extrémité avant (67) de la ligne de formage (2), où il est à nouveau introduit dans la ligne de formage (2) et posé contre les demi-moules (4, 5) circulant respectivement à l'avant dans la direction de production (6), respectivement un premier demi-moule supplémentaire (4a, 5a) étant mis en attente dans une première position d'attente (77) en aval de l'extrémité arrière (70) de la ligne de formage (2) et de part et d'autre de celle-ci, lequel demi-moule peut être introduit dans la ligne de formage (2),
**caractérisé en ce que** respectivement au moins un autre demi-moule supplémentaire (4b, 5b, 4c, 5c), entre les premières positions d'attente (77) pour les premiers demi-moules (4a, 5a) et l'extrémité arrière (70) de la ligne de formage (2), est mis en attente dans respectivement au moins une autre position d'attente (78, 79), lesquels demi-moules supplémentaire (4b, 5b, 4c, 5c) peuvent également être introduits dans la ligne de formage (2).

2. Procédé selon la revendication 1, dans lequel respectivement au moins un autre demi-moule supplémentaire (4b, 5b, 4c, 5c) peut être amené hors de la trajectoire de déplacement (85) des premiers demi-moules (4a, 5a), lorsque les premiers demi-moules (4a, 5a) sont déplacés hors de leur première position d'attente (77) vers la ligne de formage (2) ou hors de la ligne de formage (2) vers la première position d'attente (77).

3. Procédé de fabrication de tuyaux (68) avec des manchons (71) moulés en ligne contre ceux-ci, selon la revendication 1, dans lequel les premiers demi-moules (4a, 5a) et les autres demi-moules supplémentaires (4a, 5b, 4c, 5c) sont introduits directement les uns derrière les autres dans la ligne de formage (2) pour former un manchon (71) sur le tube (68).

4. Dispositif de mise en oeuvre du procédé selon l'une quelconque des revendications 1 à 3, dans lequel, en aval de l'extrémité arrière (70) de la ligne de formage (2) et de part et d'autre de celle-ci, est formée respectivement une première position d'attente (77) pour un premier demi-moule supplémentaire (4a, 5a), vers laquelle peut être amené le dispositif de transport (29), **caractérisé en ce que**, entre les premières positions d'attente (77) pour les premiers demi-moules (4a, 5a) et l'extrémité arrière (70) de la ligne de formage (2), est réalisée au moins une position d'attente supplémentaire (78, 79) pour respectivement au moins un autre demi-moule supplémentaire (4b, 5b, 4c, 5c), vers laquelle peut également être amené le dispositif de transport (29).

5. Dispositif selon la revendication 4, dans lequel ledit respectivement au moins un autre demi-moule supplémentaire (4b, 5b, 4c, 5c) est conçu pour être transporté, transversalement à la direction de production (6), hors d'une trajectoire de déplacement (85) de chacun des premiers demi-moules (4a, 5a).

6. Dispositif selon la revendication 5, dans lequel ladite au moins une autre position d'attente (78, 79) comporte les chariots (81, 82) recevant les autres demi-moules supplémentaires (4b, 5b, 4c, 5c).

7. Dispositif selon la revendication 4, dans lequel le dispositif de transport (29) est conçu sous forme de grue portique, qui comporte un portique de transport (34) mobile dans la direction de production (6) et passant au-dessus de la ligne de formage (2), deux chariots de transport (44, 45), agencés sur le portique de transport (34) et mobiles transversalement à la direction de production (6) et dans le sens opposé l'un de l'autre, et un bras de transport (53) sur chaque chariot de transport (44, 45), orienté vers le bas vers la plaque de base (1) et muni d'un dispositif de retenue (54) pour chaque demi-moule (4, 5).

8. Dispositif selon la revendication 6, dans lequel les chariots (81, 82) sont mobiles sur des rails (83).

9. Dispositif selon la revendication 4, dans lequel les premières positions d'attente (77) sont localement fixes par rapport à la plaque de base (1).

10. Dispositif selon la revendication 4, dans lequel les positions d'attente (77, 78, 79) sont relevées par rapport à la plaque de base (1).

11. dispositif selon la revendication 6, dans lequel les chariots (81, 82) peuvent être déplacés au moyen d'entraînements linéaires (84).
